Europäisches Patentamt

European Patent Office

Office européen des brevets

(11) Publication number: **0 281 699**
**A1**

# EUROPEAN PATENT APPLICATION

(21) Application number: 87302175.2

(22) Date of filing: 13.03.87

(51) Int. Cl.⁴: **C05F 9/02**

(43) Date of publication of application:
14.09.88 Bulletin 88/37

(84) Designated Contracting States:
DE ES FR GB GR IT SE

(71) Applicant: Tollemache, Denys Herbert George
76 The Mint
Rye Sussex TN31 7UW(GB)

(72) Inventor: Tollemache, Denys Herbert George
76 The Mint
Rye Sussex TN31 7UW(GB)

(74) Representative: Williams, Trevor John et al
J.A. KEMP & CO. 14 South Square Gray's Inn
London WC1R 5EU(GB)

(54) Turned and aerated silo composting plant.

(57) An aerating and turning composting plant com-
prises a silo (2) with plenum chambers (4) extending
therethrough for supplying aerating air to material in
the silo, a conveyor (1), for feeding material to the
top of the silo and a coaltype cutter conveyor (6) for
undercutting material from the bottom of the silo and
depositing it on a conveyor (12) for transfer to a
different silos chamber or back to the top of the
initial silo chamber as required. Preferably, water
sprinkling means (10) are provided to enable the
moisture content of the compost to be controlled.
Two forms of silo are disclosed, a rectangular silo,
divided into a number of longitudinally spaced cham-
bers or circular cross-section silos with a vertical
axis in which the material is transferred from silo to
silo. With the circular silo, the coal-type cutter con-
veyor can be mounted to extend radially of the
bottom of the silo so that it can be swept around the
central axis of the silo with the conveyor operating in
a direction to deposit the material at the centre of
the silo where it drops onto a conveyor beneath the
silo which takes material clear of the silo for transfer
elsewhere.

Fig. 1.

## "TURNED AND AERATED SILO COMPOSTING PLANT"

This invention relates to a turned and aerated silo composting plant, designed to make compost from Municipal refuse or other wastes of an organic or mainly organic nature.

There are many types of composting plant already on the market varying from the most sophisticated where the refuse is, after pulverisation, continuously or intermittently turned and aerated in towers or rotated in large trommels to the simplest where the refuse is placed in outside windrows and turned from time to time until it is mature.

All of these have disadvantages; the most sophisticated ones are very expensive and frequently do not produce mature compost. The main reason for this is that the towers or drums, the containers of the materials being composted, are themselves very expensive and hence it is not economically possible to provide a large enough retention to enable the composting materials to be kept under treatment for long enough to become mature. In consequence of this, it is also necessary, for most crops, that further composting should be done in windrows after removal from the plant.

The foregoing negates the main advantage of the sophisticated plants since the simple method, in windrows, needs a large area and there is a danger of smell, leachate and in simple plants the scattering of the lighter parts of the refuse by wind, as well as the need for a large area.

Previously, aerated and turned silo composting plants have suffered from the fact that the turning mechanism used limited the depth that compost could be held to some 2 m maximum, and hence the plant had to be large and expensive.

The present invention endeavours to avoid the above disadvantages by providing a coal cutter or other type of extractor, which enables the compost to be turned and "chibbled" and hence mechanically aerated as and when this is desirable to keep the fermentation in the best state, no matter what the height of the composting materials above the extractor may be. Hence it will be possible for the depth of the composting materials to be several times greater than the previous 2 m maximum. Thus, several times as much composting material can be retained on the same surface area, thus giving a considerable economy in building cost, enabling the retention and treatment times to be greatly extended at the same cost and enabling the plant to make mature compost, without the need to windrow and give further treatment after removal from the plant.

According to the invention, there is provided a composting plant comprising a silo, means for feeding refuse material to the top of the silo, means for feeding air through the material in the silo, a cutter and/or extractor for removing material from the bottom of the silo, said cutter and/or extractor being movable over substantially the entire area of the silo, and a conveyor for recirculating extracted material back to the top of the silo.

In addition to the foregoing, it has been found that whilst air can be forced through a considerable depth of composting materials "chimneys" are made in the composting materials by the air if the pressure is great enough to force the air through more than some 4 m. Moreover, in order to aerate adequately and break up the "chimneys" it is desirable to turn the materials when necessary. The plant should be arranged so that the treatment can be flexible, so that the amount of turning is not tied to the flow from input to output, in an unchangeable manner but so that, although some turning is necessary, turning can take place more often than that necessary to move the materials from input to output. To make it possible to limit the distance air must be forced there are provided one or more plenum chambers from which air can be blown outwards towards the perforated sides or inwards from the sides sucked to the centre in order to avoid the need to force the air through more than approximately 4 m. The plant may advantageously be provided with a central plenum chamber and the sides have adequate perforations. The forced air can therefore be blown outwards from this plenum chamber and can be exhausted through the sides. Alternatively, a negative pressure or suction can be provided in the plenum chamber and the air sucked from the outside of the silos to the plenum chamber. Or if the silo walls are not perforated air can be blown from a central plenum chamber or series of perforated pipes to other such pipes under negative pressure.

One of the problems associated with such composting plants is that, because of the great heat, the material becomes dessicated. A water spray may be provided so that the moisture content can be adjusted as desired.

The invention will be further described, by way of example, with reference to the accompanying drawings, in which:

Figure 1 is a diagrammatic cross-sectional view of a silo embodying the present invention;

Figure 2 is a plan view of the silo of Figure 1;

Figure 3 is a view similar to Figure 1 but showing a modified arrangement of plenum chambers;

Figure 4 is a diagrammatic plan view showing an arrangement of circular silos;

Figure 5 is a diagrammatic partial vertical sectional view of a round silo illustrating an alternative, preferred aeration means;

Figure 6 is a view to a larger scale, illustrating from the top a manner of aeration using means similar to those of Figure 5;

Figure 7 is a diagrammatic vertical sectional view of the lower part of a preferred construction for unloading a round silo; and

Figure 8 is a diagrammatic plan view of the silo of Figure 7.

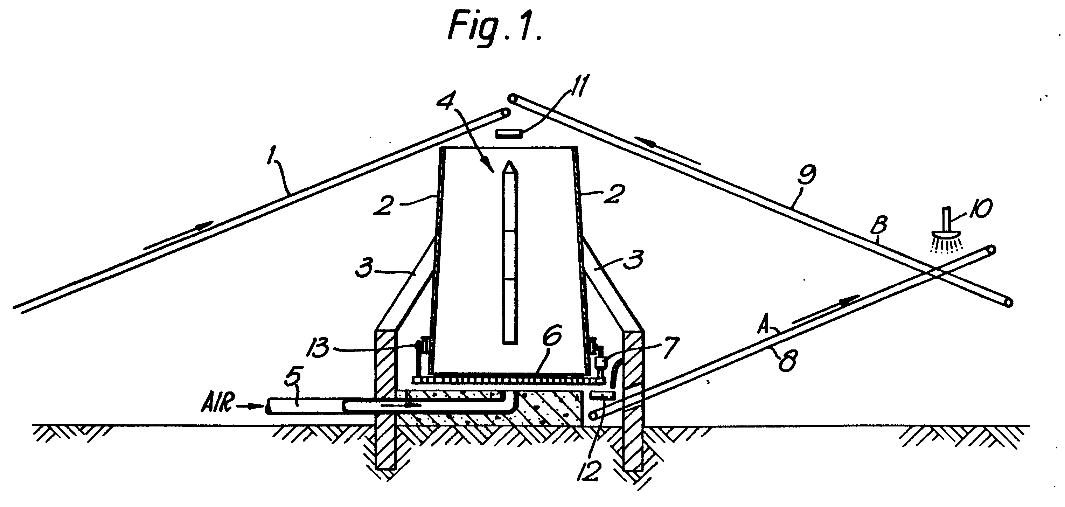

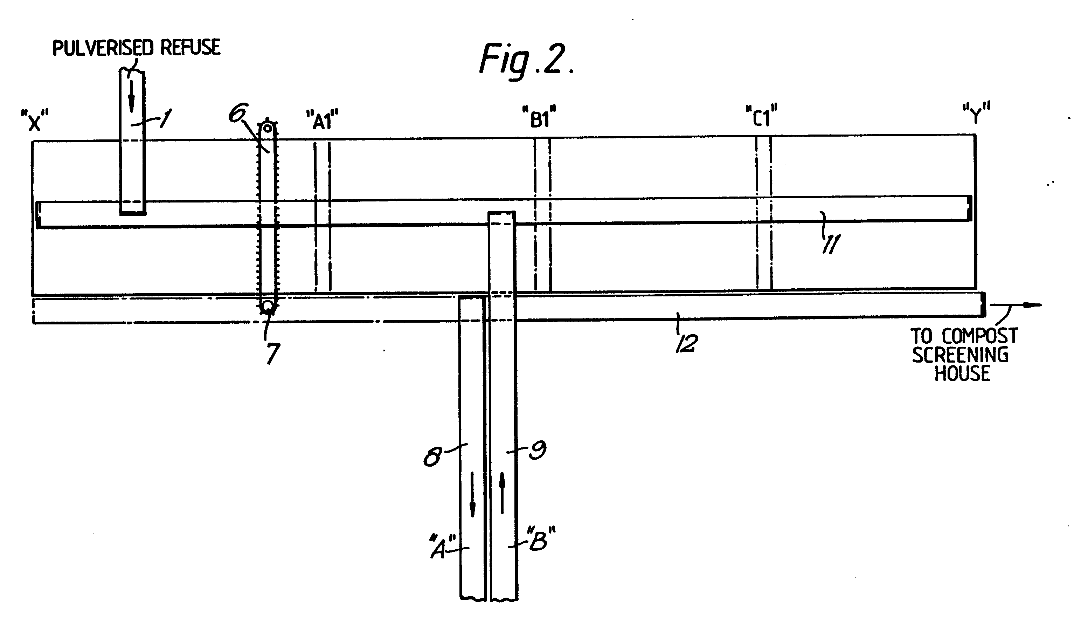

Referring to the embodiment of Figures 1 and 2, utilising a rectangular silo, a feed conveyor 1 is shown for feeding a pulverised refuse from a pulverising plant. This conveyor 1 feeds the refuse to a conveyor 11 running above the silo for discharging to wherever required along the length of the silo. While this may be operable as a shuttle conveyor which is bodily movable so that one end or other may be located over any desired position along the length of the silo, it would normally be more convenient simply to have the conveyor statically located with deflectors, not shown, provided for location at any required point for deflecting material from the conveyor 11 into the silo therebeneath.

The silo is shown as having perforated walls 2 with additional wall supports or buttresses 3 being provided in view of the substantial weight of material which may be contained within the full silo.

A central plenum chamber 4 extends longitudinally of the silo and as shown is provided with separate chambers one above the other which can be supplied with air at differing pressures, depending on the depth of material in the silo. The length of the silo is divided into separate compartments by transverse walls A1,B1,C1 which, as well as supporting the plenums, enable air to be supplied to the plenum. A pipe 5 is shown for supplying air to the bottom of the silo as, preferably, air is supplied to the bottom of the silo as well as through the various plenums for passage through the material in the silo to speed the composting operation.

A conveyor 12 runs along one side of the silo for collecting material removed from the bottom of the silo by an undercutting coal-cutter-type extractor 6, driven by a motor 7. The extractor 6 is drivable lengthwise of the silo for undercutting material from the bottom of the silo and discharging it onto the conveyor 12. Where the material being extracted is mature compost it can be delivered from the conveyor 12 to a compost screening house, otherwise it will be discharged onto a conveyor 8 which then discharges to a further conveyor 9 which returns the compost to the feeder conveyor 11. Using these means, the immature compost removed from the bottom of the silo can be fed back to the top of the silo and normally this will be done to a different compartment lengthwise of the silo so that each time the compost is turned it will be returned into a different compartment with the successive compartments containing compost at different stages of maturing.

A sprinkler 10 is shown for sprinkling water onto compost being returned via the conveyors 8 and 9 so as to maintain the required moisture level in the compost. This is a simple way of proceeding in that the moisture can be added at one location but it is possible, alternatively or additionally, to provide spraying means for spraying water directly into the top of the silo.

As mentioned previously in connection with conveyor 11, the conveyor 12 may be a bodily movable shuttle conveyor or may be provided with deflectors as is most convenient in the particular location.

In the simple example illustrated, an above-ground silo is provided but with air being fed as required to give the necessary aeration to the plenum chamber 4 and to the underfloor air duct 5. Pulverised refuse is fed by conveyor 1 onto the conveyor 11 and distributed into the first compartment between its boundaries X and A1. The compost can be progressively removed after partial maturing from the bottom of the first compartment and moved using the conveyors 12,8, 9 and 11 into the second compartment between the walls A1 and B1 for further composting. The refuse will then in turn be passed from that compartment to the next compartment and finally to the last compartment between the wall C1 and end wall Y. The mature compost is extracted from the bottom of this last compartment.

In larger plants, several extractors 6 will be provided and instead of having the single conveyors 11 and 12, two or more conveyors can be provided in order to allow more than one feeding or transfer operation to take place at a time.

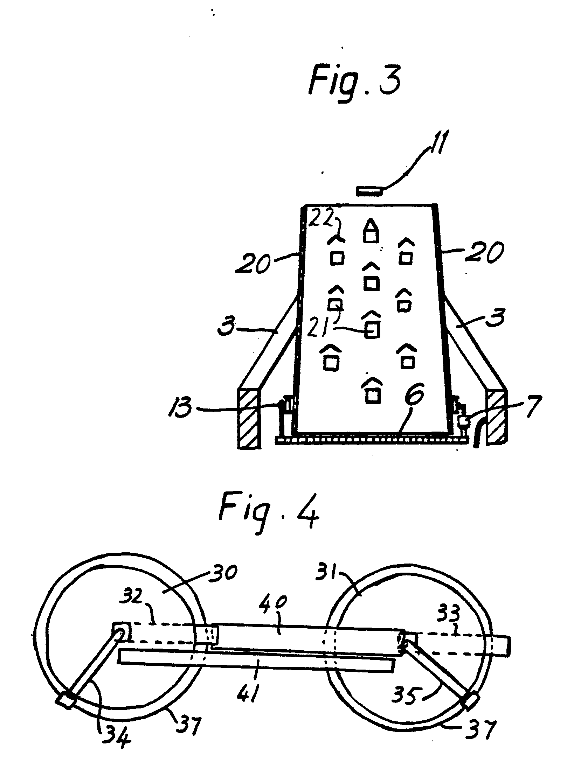

While a single plenum is shown in Figure 1, or at least a single plenum divided up into a series of vertically spaced chambers so that air can be ejected at different pressures from the different height plenum chambers, an alternative arrangement is shown in Figure 3 where different plenums are spaced vertically of the silo. While these plenums are shown as extending longitudinally of the silo, it will be appreciated that, in some instances, they can be provided transversely of the silo in which case they can be used to provide structural reinforcement in tension between the opposite side walls to hold them together and stop them spreading apart under the pressure exerted by the content when the silo is full. In the particular illustration of Figure 3, the silo 20 is shown as comprising separate plenums 21 with baffles 22 being shown above the plenums. The baffles are inclined so as to help divert downwardly flowing compost to permit it readily to flow past the plenums and also serve to divert upward flowing air so that it is less likely to form channels in the material being composted and is more likely to pass generally throughout the bulk of the waste material. Clearly, it will be appreciated that the actual shape of these baffles will vary depending upon the particular circumstances in a particular silo and thus in some cases simple plates, either inclined or flat, may be provided or, where they are inclined, apertures may be provided therethrough to permit any air reaching the baffles not being trapped but being allowed to escape into the waste material thereabove.

While we have described above the provision of the suction and pressure plenums at different heights it will be appreciated that different pressures may be applied at spaced plenums of the same height. This would tend to promote horizontal flow of air through the waste material and thus assist in the avoidance of vertical "chimneys" for the flow of air up through the waste.

As will be appreciated, where the plenums at different levels are not all arranged one immediately above another, air in passing from one to the other can have both vertical and horizontal components when moving from one plenum to another. This is particularly advantageous where suction and pressure are applied to alternate plenums vertically spaced in the silo as this will assist in dispersion of air through the composting waste material.

Instead of the rectangular silo disclosed, it is possible to have round silos and a suitable arrangement will comprise four silos with materials extracted from the bottom of one silo being raised by a conveyor or elevator to the top of the next silo, and then being passed on from silo to silo until mature compost is obtained from the last silo for passage to the final treatment.

While, as indicated, it is preferred for four round silos to be provided in order to obtain the necessary maturing time, it should be appreciated that it is not necessarily essential as the number of silos concerned will depend upon how long the material is left in the particular silo and the extent to which it is possible to recycle material back to the top of a silo through which it has already been passed, at least once. However, while one would normally expect to have more than two silos, two silos only are shown in Figure 4 for the purposes of illustration.

Referring to this Figure, two silos 30,31 are shown with each silo having a conveyor extending from beneath the centre of the silo to conduct compost away from the silo which has been undercut by means of a coal-type cutter conveyor 34 or 35, the outer ends of which carrying the motors are mounted on rails 36,37.

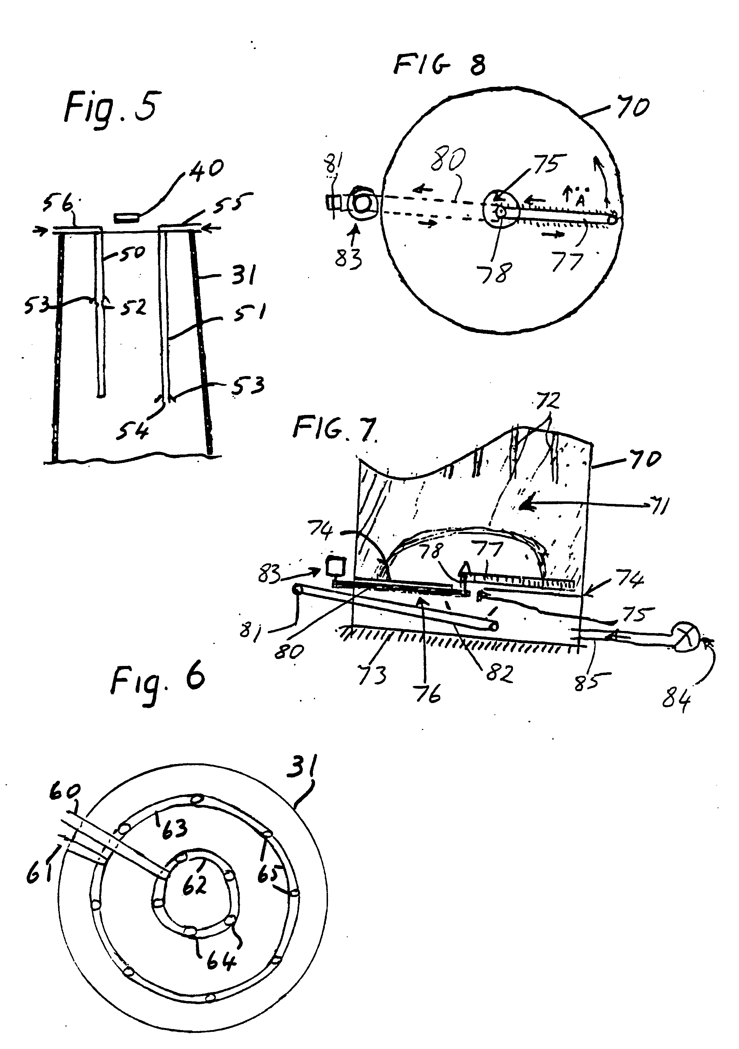

It will be appreciated that the manner in which the silos are supported by supports extending from externally of the rail 37 are not shown but can be similar to the buttress arrangement shown for Figure 1. However, an alternative construction with the cutter/extractor driven from the centre of the silo will be described later in combination with Figures 7 and 8.

The conveyor 32 discharges onto an elevator conveyor 40 which carries material to the top of the silo 31. A further conveyor 41 leads from near the discharge end of the conveyor 40 back over to the silo 30 so that if any material needs to be replaced into the silo 30, after having been removed from the bottom thereof, it is simply shifted upward to the elevator conveyor 40 and then, instead of being discharged from the end thereof into the silo 31, a deflector (not shown) is brought into operation to cause the material to be discharged onto the conveyor 41 which takes it back for feeding into the top of the silo 30. The feeder conveyor for feeding waste material to the top of silo 30 has been omitted for the purposes of clarity as have the various plenums and baffles, if such are required, which will extend across the circular silos 30,31. While the provision of porous walls 2 has been disclosed in connection with Figure 1, in most cases where a plurality of plenums are provided such porous walls will not be required, due to the air being added and abstracted through different ones of the plenums. Having staggered plenums operating in this way, a considerable silo height can be obtained. Alternatively vertical pipes may replace the plenums; such pipes would have wall perforations and internal chambers so that air would be introduced at a pressure of suction suited to the depth of material.

Additionally, while air has been shown as being fed to the bottom of the silo in Figure 1, this is not necessarily essential where the plenums extend to quite close to the bottom of the silo since the main aeration can take place in the upper part of the silo and it is simply the last compacted part of the material which is then removed by the coal-type cutter conveyors.

Reverting to the showing of Figure 4, material fed to the silo 30 will gradually pass down through the silo as successive layers of material are removed from the bottom of the silo. This removal is carried out by the coal-type cutter conveyor 34 which extends radially of the silo and is rotated about the centre of the silo with the cutter conveyor operating to take the removed undercut material to the centre of the silo where it is then removed by the conveyor 32. Means will be provided for adding water as required, either by direct sprinkling into the silo or by sprinkling onto material being carried from one silo the next.

The preferred means of supplying air into the round silos is by way of downpipes, as illustrated in Figures 5 and 6.

Firstly, referring to Figure 5, the silo 31 is shown as provided with two down pipes 50 and 51 connected respectively with inlet pipes 56 and 55. The pipe 51 is shown as having an exit aperture at the bottom whereas pipe 50 is shown as having apertures 52 part way along its length. In each case, a frustoconical baffle 53 is mounted above the outlets so as to resist the flow of air up adjacent the exterior walls of the pipes. A conveyor 40 is shown for discharging material into the silo 31.

It must be appreciated that Figure 5 is diagrammatic in order to illustrate different ways in which the downpipes may be formed although in a very simple construction, one would simply have different downpipes extending to different depths with, in each case, the air being discharged out through the bottom end of the pipe, as with the exit 54 in pipe 51. Normally each pipe would only be intended to discharge at a particular level due to the fact that one could expect to require to use a higher discharge pressure at the lower end of the silo as opposed to higher up the silo. Groups of downpipes can readily be connected to different plenums so as to provide the pressure required in any particular pipe. Instead of having all the pipes blowing air into the silo it is also possible to have some of the pipes extracting air so as to get a horizontal air flow through the material in the silo, rather than a purely vertical air flow.

Figure 6 illustrates how connections 60 and 61 from the exterior of the silo connect to plenums 62 and 63 which are respectively connected with downpipes 64 and 65. One could have air at a different pressure supplied through the plenums 61 and 60 with the downpipes 64 and 65 exiting at different levels or, in an alternative arrangement, one could have the connection 60 supplied with air under pressure and the connection 61 connected to air of reduced pressure so that air discharged from the downpipe 64 would move across the silo to be extracted through the downpipe 65.

For purposes of simplicity, the structure supporting the downpipes has not been shown, although a suitable structure across the top of the silo to support the upper ends of the pipes can readily be provided without unduly interfering with the supply of material to the silo from the feed conveyor.

Figure 7 diagrammatically illustrates the lower end of a round silo 70 in which, instead of having the cutter/extractor driven from externally of the silo area as shown in Figure 4, the entire cutter arrangement is mounted within the plan area of the silo walls as this simplifies construction of the silo itself. The drive for the cutter/extractor is then provided near the centre of the silo to cause both the circular sweeping movement and the drive to the chain cutter teeth to undercut and convey waste to the central outlet to this discharge conveyor.

Referring to Figure 7, the silo 70 is shown mounted upon a concrete base 73 and spaced from this base there is a steel support plate 74 provided with a central aperture 75. Aeration downpipes 72 are shown in the silo 70 with the silo containing composting refuse 71. The cutter/extractor 76 is provided with an external motor 83 with a mechanical drive being provided from there to a central location about which a cutter/extractor arm 77 rotates about an axis 78. A drive chain 80 provides the drive to the centre of the cutter/extractor apparatus and while a small conveyor may be provided over the drive from the motor 83 to the centre of the silo, in practice it is found preferable to have a larger conveyor 82 to collect material falling through the hole 75 and to convey it to the exterior of the silo. The conveyor 82 is driven by a drive to an exterior drive roller 81.

A suitable cutter/extractor is the Atlas (Trademark) chain-type unloader, manufactured by A O Smith Harvestore Products Inc of the United States.

The space beneath the steel plate 74 and above the concrete base 73 acts as a plenum chamber for the supply of air to the bottom of the silo from a fan 84 provided with an inlet conduit 85. The fan 84 is not operated when the cutter/extractor is working on an extraction operation but during other times air is supplied through the hole 75 to assist in aerating the material 71 in the silo.

Figure 8 diagrammatically illustrates from above the arrangement of the extractor with the arm 77 sweeping about the axis 78 so as to discharge material through the central hole 75.

## Claims

1. A composting plant comprising a silo (2) and means (1,11) for feeding refuse material to the top of the silo, characterised by the provision of means (5,4) for feeding air through the material in the silo, a cutter and/or extractor (6) for removing material from the bottom of the silo, said cutter and/or extractor (6) being movable over substantially the entire area of the silo, and a conveyor (12,8,9,11) for recirculating extracted material back to the top of the silo.                :

2. A composting plant according to claim 1, characterised in that means (10) are provided for moistening the material.

3. A composting plant according to claim 2, characterised in that the moistening means comprises a spray (10) for spraying water onto material being recirculated back to the top of the silo.

4. A composting plant according to claim 2, characterised in that the moistening means comprises a spray for spraying water directly into the top of the silo.

5. A composting plant according to any preceding claim, characterised in that the air feeding means comprises a plenum (4;21) extending through the silo and means for applying pressure or suction to the plenum.

6. A composting plant according to claim 5, characterised in that air passage apertures are provided through walls of the silo.

7. A composting plant according to claim 5 or 6, characterised in that a plurality of plenums (21) are provided at different heights within the silo.

8. A composting plant according to claim 7, characterised in that means are provided for applying different pressure differentials to the different height plenums.

9. A composting plant according to claim 7 or 8, characterised in that the plurality of plenums (21) are spaced one from the other.

10. A composting plant according to claim 9, characterised in that means are provided for applying suction and pressure to alternate plenums (21) spaced apart in the silo.

11. A composting plant according to claim 9 or 10, characterised in that the plenums (21) at different levels are not all arranged one immediately above the other whereby air has both a vertical and a horizontal component when moving from one plenum to another.

12. A composting plant according to any preceding claim, characterised in that additional deflecting baffles (22) are provided in the silo to help avoid the formation of chimneys.

13. A composting plant according to any one of claims 1 to 4, characterised in that the air feeding means comprise a plurality of spaced pipes (50,51;64,65;72) extending downwardly into the silo.

14. A composting plant according to claim 13, characterised in that baffles (53) are provided on the pipes to resist the flow of air up adjacent the exterior walls of the pipes.

15. A composting plant according to claim 13 or 14, characterised in that different ones of the pipes extend to different depths in the silo.

16. A composting plant according to claim 13, 14 or 15, characterised in that pressure is applied to some of the pipes and suction to others of the pipes.

17. A composting plant according to any preceding claim, characterised in that the means for feeding air through material in the silo includes means (5) for supplying air at the bottom of the silo.

18. A composting plant according to any preceding claim, characterised in that the cutter and extractor is a coal-type cutter/extractor (6).

19. A composting plant according to any preceding claim, characterised in that the silo (2) is rectangular and is divided into a plurality of open-topped chambers by substantially vertical walls.

20. A composting plant according to any preceding claim, characterised in that the cutter/extractor (6) is mounted for shuttle movement backwards and forwards longitudinally of the silo while operating to move material from the silo and feed it to the conveyor (12) extending longitudinally of the silo.

21. A composting plant according to any one of claims 1 to 18, characterised in that the silo (30;31) is round and is provided with a radially extending cutter/extractor (34) which is rotatable about the centre of the silo.

22. A composting plant according to claim 21, characterised in that the cutter/extractor (6) discharges to the centre of the silo onto a conveyor (32;33) extending from beneath the silo.

23. A composting plant according to claim 21 or 22, characterised in that a plurality of round silos (30,31) are used to provide a plurality of separate chambers.

24. A composting plant according to claim 21, characterised in that conveyors (32,33,40,41) are operable selectively to transfer material removed from the bottom of one chamber back into the same chamber, to the top of another chamber, or away from the silo as mature compost.

Fig. 1.

PULVERISED REFUSE

*Fig.2.*

"X"  1  6  "A1"  "B1"  "C1"  "Y"

11

7  12  TO COMPOST
SCREENING
HOUSE

8  9

"A"  "B"

0 281 699

# Fig . 3

# Fig . 4

*Fig. 5*

*FIG 8*

*FIG. 7*

*Fig. 6*

# DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | GB-A-2 180 230 (D.H.G. TOLLEMACHE)<br>* Figure 1; claims *<br>--- | 1,2,6,<br>18-20 | C 05 F 9/02 |
| X | FR-E- 85 086 (SOCIETE DE TRAITEMENT INDUSTRIEL DES GADOUES)<br>* Whole document * | 1,21-24 | |
| Y | | 2,4-7,9<br>,11,13,<br>15-20<br><br>--- | |
| Y | FR-A-2 473 038 (TRAITEMENT INDUSTRIEL DES GADOUES TRIGA)<br>* Whole document *<br>--- | 2,19,20 | |
| A | GB-A-2 164 331 (T.R. WOTTON)<br>* Page 2, lines 23-30,79-83 *<br>--- | 18 | |
| Y | FR-E- 43 725 (M. DEGUSSEAU)<br>* Figures 1,2; abstract *<br>--- | 5,6,17 | |
| Y | US-A-2 209 613 (G.H. ROEDER)<br>* Figures 2,8,9; page 2, right-hand column, lines 58-73; page 3, left-hand column, lines 16-27; page 4, left-hand column, lines 3-15 *<br>--- | 7,9,11 | TECHNICAL FIELDS SEARCHED (Int. Cl.4)<br><br>C 05 F |
| Y | FR-A-2 312 474 (J.R. KAELIN)<br>* Figure 4; page 7 *<br>--- | 13,15 | |
| Y | DE-A-1 592 611 (W. DIETENBACHER)<br>* Figure 1; claims *<br>--- | 13 | |
| Y | EP-A-0 173 502 (J.G. LAURENSON, Jr.)<br>* Page 3, lines 11-30; page 5, lines 1-29; page 9, lines 9-20; page 9, line 28 - page 10, line 12 *<br>--- -/- | 13,16 | |

The present search report has been drawn up for all claims

| Place of search | Date of completion of the search | Examiner |
|---|---|---|
| THE HAGUE | 09-12-1987 | SCHUT,R.J. |

European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | BE-A- 692 416 (KLOCKNER-HUMBOLDT-DEUTZ AG) * Claims; figures 1-5 * | 7,13 | |
| Y | US-A-2 639 902 (W.A. KUEBLER) * Column 7 * | 18 | |
| Y | FR-A- 753 608 (M. DEGUSSEAU) * Page 2, lines 87-97 * | 2,4 | |
| Y | DE-B-1 083 186 (PASSAVANT-WERKE) * Claims * | 18 | |

TECHNICAL FIELDS SEARCHED (Int. Cl.4)

The present search report has been drawn up for all claims

| Place of search | Date of completion of the search | Examiner |
|---|---|---|
| THE HAGUE | 09-12-1987 | SCHUT,R.J. |